# EUROPEAN PATENT APPLICATION

(11) **EP 2 474 657 A2**
(43) Date of publication of application: **11.07.2012**
(21) Application number: 11194726.3
(22) Date of filing: 21.12.2011
(51) Int. Cl.: D06F 15/00

(54) **Washing apparatus and washing method using the same**

(30) Priority: 05.01.2011 KR 20110000980
(71) Applicant: Samsung Electronics Co., Ltd., Suwon-si, Gyeonggi-do 506-762 (KR)
(72) Inventor: Pyo, Sang Yeon, Gyeonggi-do (KR); Hyun, Sang Min, Seoul (KR); Kim, Ki Soo, Gyeonggi-do (KR)
(74) Representative: Grünecker, Kinkeldey, Stockmair & Schwanhäusser

(57) **Abstract**

A washing apparatus includes an expandable and contractible wash tub and an auxiliary tank communicating with the wash tub to store wash water. Laundry in the wash tub is washed using bubbles supplied by a bubble supply device and using contraction and expansion of the wash tub.

## Description

### BACKGROUND

### 1. Field

Embodiments of the present disclosure relate to a washing apparatus that washes laundry using contraction and expansion of a wash tub and using bubbles.

### 2. Description of the Related Art

Generally, a washing machine includes a water tub mounted in a machine body to contain a predetermined amount of wash water and a rotary tub mounted in the water tub to contain laundry, the rotary tub being rotated by a motor.

The laundry in the rotary tub may be washed by whirlpools generated by a pulsator in the rotary tub or using rotation and dropping of the laundry caused by the rotation of the rotary tub.

### SUMMARY

It is an aspect of the present disclosure to provide a washing apparatus that washes laundry using contraction and expansion of a wash tub and using bubbles.

Additional aspects of the disclosure will be set forth in part in the description which follows and, in part, will be apparent from the description, or may be learned by practice of the disclosure.

In accordance with an aspect of the present disclosure, a washing apparatus includes an apparatus body, an expandable and contractible wash tub having one side supported at the upper part of the apparatus body, the wash tub being provided with an introduction port through which laundry is introduced, an auxiliary tank disposed at the lower part of the apparatus body to store wash water discharged from the wash tub, a front cover to support the other side of the wash tub, the front cover having a door hingedly mounted to open and close the introduction port, and a circulation pump disposed between the wash tub and the auxiliary tank so that the wash tub and the auxiliary tank communicate with each other via the circulation pump to circulate wash water between the wash tub and the auxiliary tank so that the wash tub is contracted and expanded.

The washing apparatus may further include a bubble supply device including a bubble pump to supply wash water from the auxiliary tank to the wash tub so that laundry in the wash tub is washed using bubbles, an ejector to increase flow speed of the wash water supplied to the wash tub by the bubble pump, and an air introduction pipe provided adjacent to the ejector to allow external air to be introduced therethrough.

The front cover may be moved based on expansion and contraction of the wash tub.

The wash tub may be disposed at the upper part of the apparatus body, the auxiliary tank may be disposed at the lower part of the apparatus body, and the bubble supply device may be disposed between the wash tub and the auxiliary tank.

The washing apparatus may further include a wash water supply pipe connected between one side of the bubble pump and the auxiliary tank and a bubble supply pipe connected between the other side of the bubble pump and the wash tub.

The circulation pump may include a motor rotatable in forward and reverse directions.

The washing apparatus may further include a first connection pipe connected between the circulation pump and the wash tub and a second connection pipe connected between the auxiliary tank and the wash tub, wherein the second connection pipe may be provided with a valve to control flow of the wash water.

The auxiliary tank may have a drainage pipe communicating with the outside to drain wash water from the auxiliary tank, and the drainage pipe may be provided with a drainage valve to control drainage of the wash water.

The wash tub may be contracted and expanded by wash water moving between the wash tub and the auxiliary tank according to the forward and reverse rotation of the circulation pump.

In accordance with another aspect of the present disclosure, a washing method of a washing apparatus includes hermetically sealing an expandable and contractible wash tub after placing laundry, wash water and detergent in the wash tub and washing the laundry using contraction and expansion of the wash tub.

The washing method may further include washing the laundry in the wash tub using bubbles.

The washing apparatus may further include an auxiliary tank to store wash water, and washing the laundry in the wash tub using bubbles may include using bubbles generated by mixing external air with wash water containing detergent during supply of the wash water from the auxiliary tank to the wash tub.

Washing the laundry using contraction and expansion of the wash tub may include washing the laundry using contraction and expansion of the wash tub during movement of wash water between the wash tub and the auxiliary tank using a motor rotatable in forward and reverse directions.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view schematically illustrating the external appearance of a washing apparatus according to an embodiment of the present disclosure;
FIG. 2 is a view schematically illustrating the interior structure of the washing apparatus according to the embodiment of the present disclosure;
FIG. 3 is a sectional view of the washing apparatus according to the embodiment of the present disclosure;
FIG. 4 is a sectional view illustrating a bubble supply device according to an embodiment of the present disclosure;
FIG. 5 is a flow chart illustrating a washing process of the washing apparatus according to the embodiment of the present disclosure;
FIG. 6 is a view illustrating the flow of wash water according to an embodiment of the present disclosure;
FIG. 7 is a view illustrating an expanded state of a wash tub according to an embodiment of the present disclosure; and
FIG. 8 is a view of the washing apparatus according to the embodiment of the present disclosure installed in a wall of an indoor space.

### DETAILED DESCRIPTION

Reference will now be made in detail to the embodiments of the present disclosure, examples of which are illustrated in the accompanying drawings, wherein like reference numerals refer to like elements throughout.

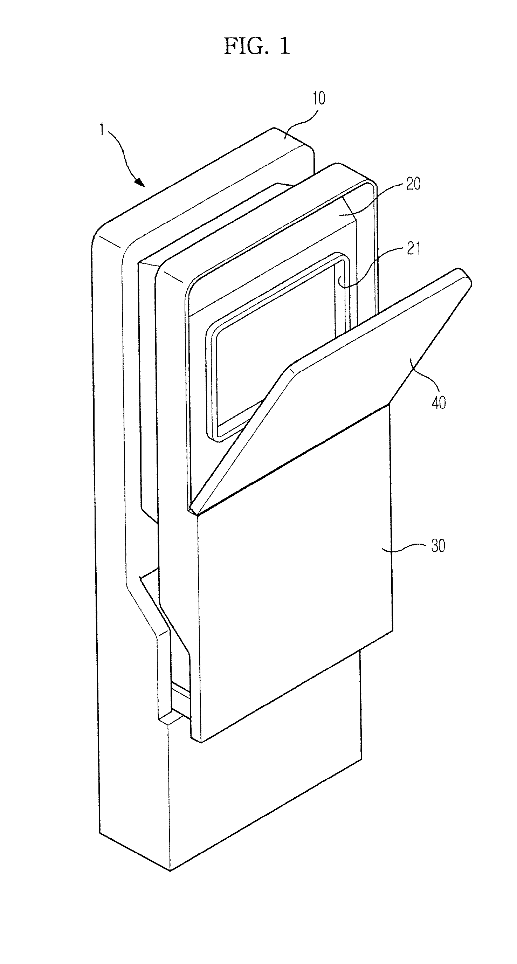

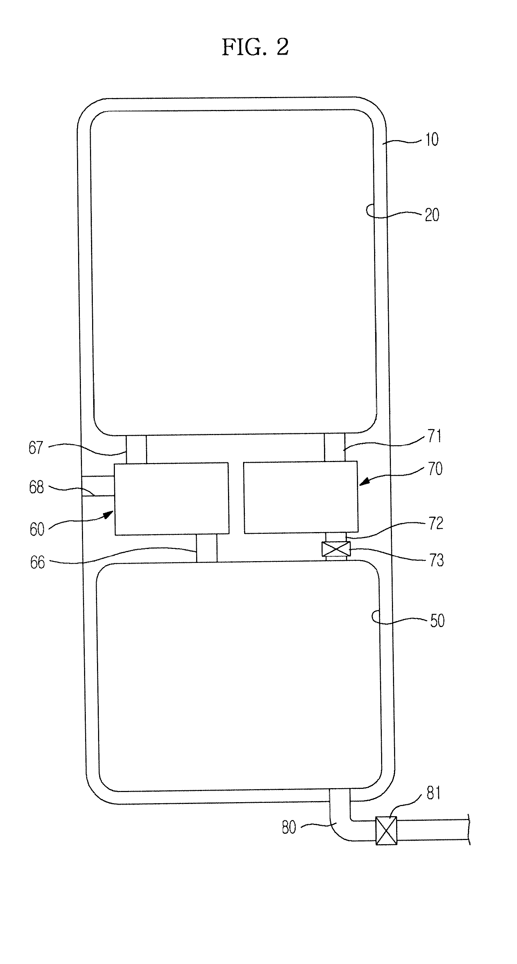

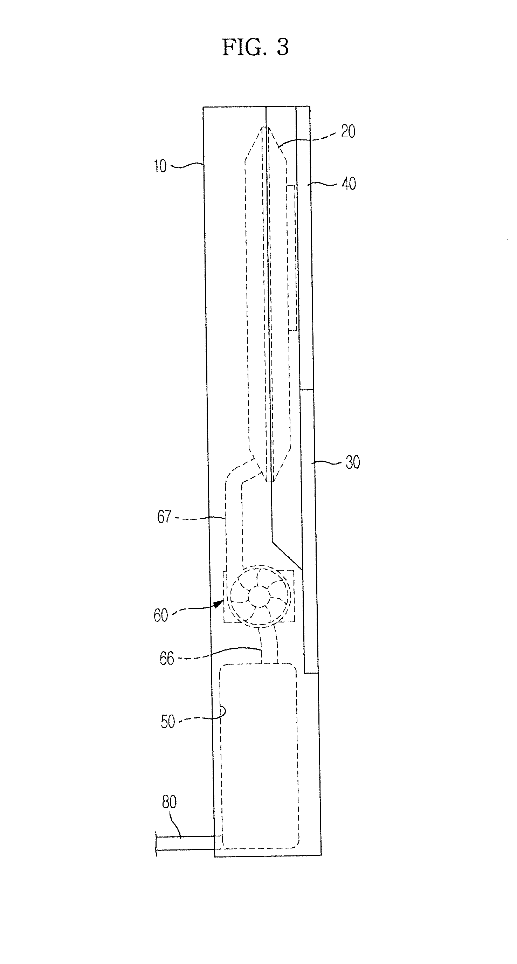

FIG. 1 is a perspective view schematically illustrating the external appearance of a washing apparatus 1 according to an embodiment of the present disclosure, FIG. 2 is a view schematically illustrating the interior structure of the washing apparatus according to the embodiment of the present disclosure, and FIG. 3 is a sectional view of the washing apparatus according to the embodiment of the present disclosure.

Referring to FIGS. 1 to 3, the washing apparatus 1 may include an apparatus body 10 forming the external appearance thereof and an expandable and contractible wash tub 20 provided in the upper part of the apparatus body 10.

The apparatus body 10 may be formed in the shape of a box extending vertically. The apparatus body 10 may be installed in an indoor space.

The wash tub 20 defines a space to receive a small amount of laundry. The wash tub 20 may be made of an elastic resin. The wash tub 20 may be formed in the shape of bellows by which the wash tub may be contracted and expanded.

Also, one side of the wash tub 20 may be fixed to the apparatus body 10, and an introduction port 21, through which laundry is introduced into the wash tub 20, may be formed at the other side of the wash tub 20.

At the front of the apparatus body 10 may be provided a front cover 30 to which the other side of the wash tub 20 is coupled. The front cover 30 may be slidably moved in the frontward-and-rearward direction of the apparatus body 10. At the front cover 30 may be mounted a door 40 rotatable about a hinge shaft provided at the lower end thereof.

The front cover 30 may be moved based on expansion and contraction of the wash tub 20 so that the front cover 30 is slidably moved in the frontward-and-rearward direction of the apparatus body 10.

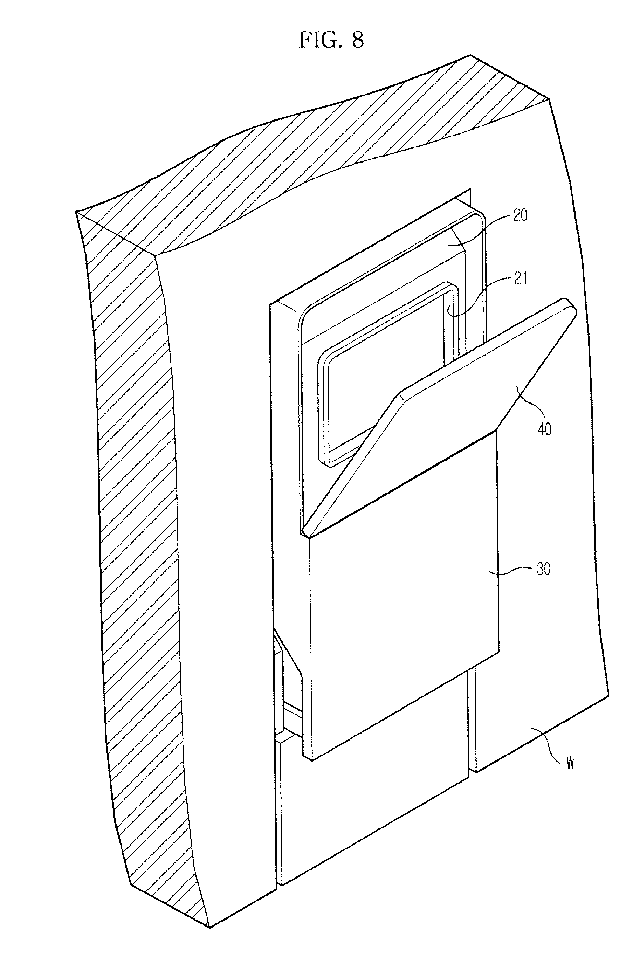

When the washing apparatus 1 is not in use, the wash tub 20 is in a contracted state with the result that the front cover 30 attached to the other side of the wash tub 20 is closed. In a case in which the washing apparatus 1 is installed in a wall W of an indoor space as shown in FIG. 8, therefore, spatial efficiency is improved.

The door 40 is mounted to open and close the introduction port 21 of the wash tub 20. When the door 40 is closed, the introduction port 21 of the wash tub 20 is closed with the result that the interior of the wash tub 20 is hermetically sealed. During contraction and expansion of the wash tub 20, which will be described below, therefore, introduction of external air into the wash tub 20 is prevented so that smooth expansion and contraction of the wash tub 20 due to flow of wash water is achieved.

At the lower part of the apparatus body 10 may be provided an auxiliary tank 50 to store wash water discharged from the wash tub 20 when the wash tub 20 is contracted.

Between the wash tub 20 and the auxiliary tank 50 may be provided a bubble supply device 60 to generate and supply bubbles into the wash tub 20 so that laundry in the wash tub 20 is washed by the bubbles.

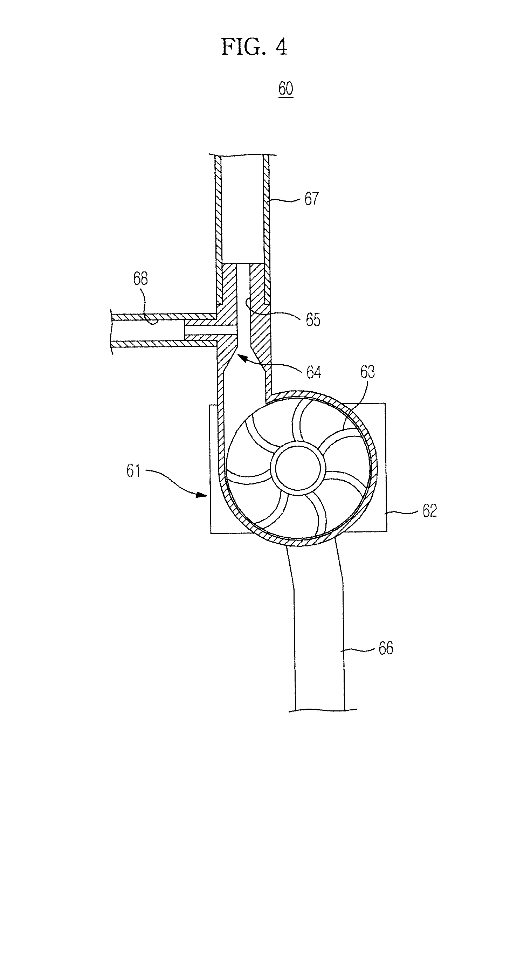

As shown in FIG. 4, the bubble supply device 60 may include a bubble pump 61 to mix wash water with air.

One side of the bubble pump 61 may communicate with the auxiliary tank 50, and the other side of the bubble pump 61 may communicate with the wash tub 20.

One side of the bubble pump 61 may be connected to a wash water supply pipe 66 communicating with the auxiliary tank 50 to supply wash water from the auxiliary tank 50 to the bubble pump 61, and the other side of the bubble pump 61 may be connected to a bubble supply pipe 67 to supply bubbles generated by the bubble pump 61 to the wash tub 20.

Also, one side of the bubble supply pipe 67 may be connected to an air introduction pipe 68, through which external air is introduced.

Consequently, wash water supplied to the wash tub 20 by the bubble pump 61 is mixed with air introduced through the air introduction pipe 68 to generate bubbles, which are supplied to the wash tub 20.

The bubble pump 61 may include a bubble motor 62 to generate rotary force, an impeller 63, rotatable by the bubble motor 62, through which wash water flows, and an ejector 64 to increase flow speed of wash water discharged by the impeller 63.

The air introduction pipe 68 may be disposed upstream of the ejector 64 so that external air is suctioned through the air introduction pipe 68 due to the pressure of wash water discharged by the ejector 64.

That is, the impeller 63, rotatable by rotary force from the bubble motor 62, suctions wash water from the auxiliary tank 50, and the suctioned wash water is discharged to the bubble supply pipe 67. At this time, the discharged wash water passes through a nozzle 65 of the ejector 64. At this time, the pressure of the wash water becomes lower than atmospheric pressure.

At this time, external air is introduced through the air introduction pipe 68 provided at the vicinity of the ejector 64 as the pressure of the air introduction pipe 68 is lower than atmospheric pressure. As a result, bubbles are generated in wash water supplied to the wash tub 20.

Also, a circulation pump 70 to expand and contract the wash tub 20 may be provided between the wash tub 20 and the auxiliary tank 50.

The circulation pump 70 may include a brushless direct current (BLDC) motor rotatable in forward and reverse directions.

One side of the circulation pump 70 may communicate with the wash tub 20, and the other side of the circulation pump 70 may communicate with the auxiliary tank 50. That is, a first connection pipe 71 connected between the wash tub 20 and the circulation pump 70 so that the wash tub 20 and the circulation pump 70 communicate with each other may be provided at one side of the circulation pump 70, and a second connection pipe 72 connected between the auxiliary tank 50 and the circulation pump 70 so that the auxiliary tank 50 and the circulation pump 70 communicate with each other may be provided at the other side of the circulation pump 70.

When the circulation pump 70 is rotated in the forward direction, wash water from the auxiliary tank 50 may be supplied to the wash tub 20. When the circulation pump 70 is rotated in the reverse direction, wash water from the wash tub 20 may be supplied to the auxiliary tank 50. As a result, the interior of the wash tub 20 is contracted and expanded.

A circulation valve 73 to enable the auxiliary tank 50 and the wash tub 20 to selectively communicate with each other to control the flow of wash water between the auxiliary tank 50 and the wash tub 20 may be provided at the second connection pipe 72. The circulation valve 73 may be a solenoid valve.

Meanwhile, a drainage pipe 80 communicating with the outside to drain wash water from the auxiliary tank 50 may be connected to the auxiliary tank 50. A drainage valve 81 which is controlled to be turned on and off may be mounted at the drainage pipe 80 to control drainage of wash water.

Hereinafter, the operation of the washing apparatus will be described.

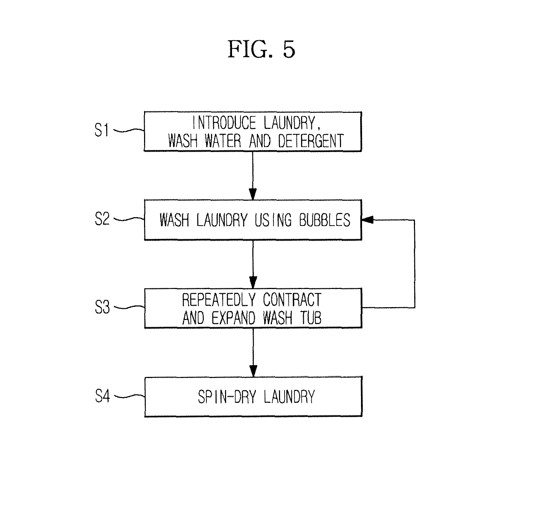

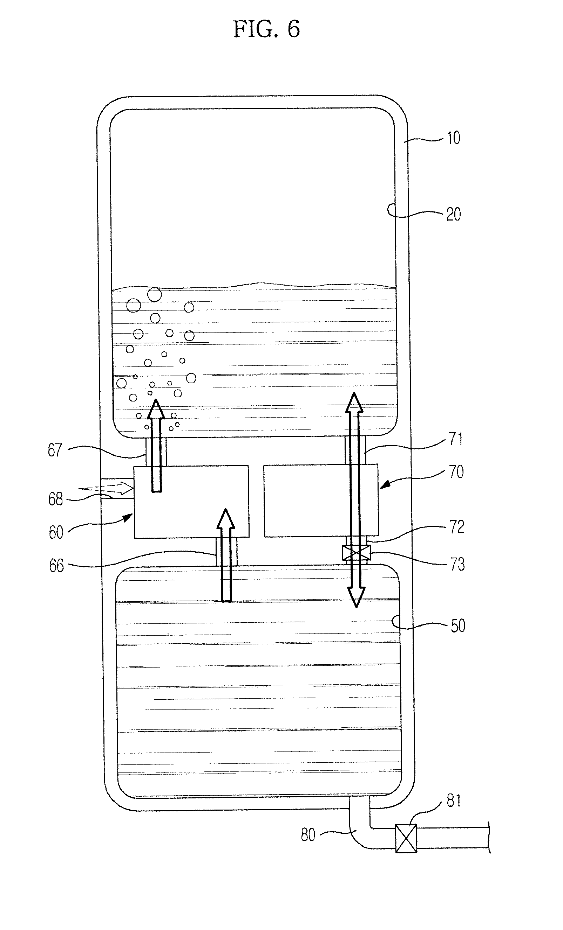

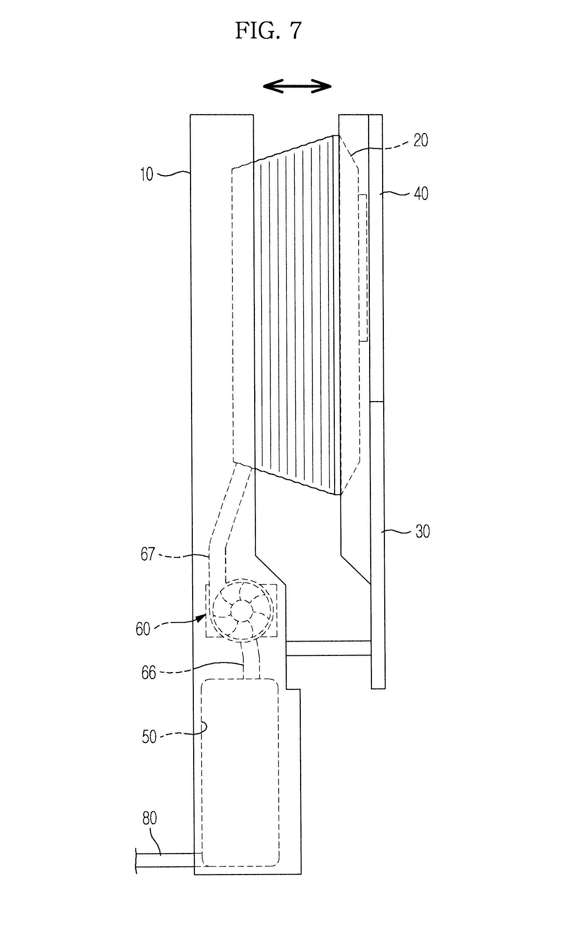

FIG. 5 is a flow chart illustrating a washing process of the washing apparatus according to the embodiment of the present disclosure, FIG. 6 is a view illustrating the flow of wash water according to an embodiment of the present disclosure, and FIG. 7 is a view illustrating an expanded state of a wash tub according to an embodiment of the present disclosure. Referring to FIGS. 5 to 7, first, a user opens the door 40 and puts a small amount of laundry into the wash tub 20 through the introduction port 21 of the wash tub 20 (S1).

When the user supplies water and detergent into the wash tub 20 and closes the door 40, the introduction port 21 of the wash tub 20 is closed by the door 40. At this time, the circulation valve 73 is in an open state, and therefore, the auxiliary tank 50 and the wash tub 20 are filled with wash water.

When the user starts the washing apparatus 1, the bubble supply device 60 is operated (S2). That is, as shown in FIG. 6, the impeller 63 of the bubble supply device 60 is rotated, and wash water from the auxiliary tank 50 is supplied into the wash tub 20 via the bubble supply pipe 67 through the wash water supply pipe 66.

At this time, external air is introduced through the air introduction pipe 68 by the ejector 64 and is mixed with wash water containing detergent during the supply of the wash water from the auxiliary tank 50 to the wash tub 20. As a result, bubbles are generated Consequently, the water and the detergent are stirred to increase solubility of the detergent. The laundry in the wash tub 20 is primarily washed by a water current due to such bubbles.

Subsequently, the circulation pump 70 is operated (S3). When the circulation pump 70 is rotated in the forward direction, wash water is supplied from the wash tub 20 to the auxiliary tank 50. As a result, the wash tub 20 is contracted (see FIG. 3).

On the other hand, when the circulation pump 70 is rotated in the reverse direction, wash water is supplied from the auxiliary tank 50 to the wash tub 20. As a result, the wash tub 20 is expanded as shown in FIG. 7.

That is, the wash tub 20 is repeatedly contacted and expanded according to the forward and reverse rotation of the circulation pump 70 to wash the laundry in the wash tub 20.

The laundry is washed using contraction and expansion of the wash tub 20, thereby providing a hand washing effect. As a result, damage to laundry due to tangling of the laundry is prevented.

Meanwhile, washing using bubbles and washing based on contraction and expansion of the wash tub may be repeated according to user selection.

Subsequently, a spin-drying operation is performed (S4). The drainage valve 81 is opened, and wash water from the auxiliary tank 50 is drained to the outside through the drainage pipe 80. At this time, the wash tub 20 is contracted by operation of the circulation pump 70, and therefore, the laundry in the wash tub 20 is spin-dried while being compressed.

As is apparent from the above description, the washing apparatus is suitable for washing a small amount of laundry.

Also, the washing apparatus prevents damage to and tangling of laundry.

Also, laundry is washed using bubbles and using expansion and contraction of the wash tub, thereby improving washing efficiency.

Although a few embodiments of the present disclosure have been shown and described, it would be appreciated by those skilled in the art that changes may be made in these embodiments without departing from the principles and spirit of the invention, the scope of which is defined in the claims and their equivalents.

Although a few embodiments of the present disclosure have been shown and described, it would be appreciated by those skilled in the art that changes may be made in these embodiments without departing from the principles and spirit of the invention, the scope of which is defined in the claims and their equivalents.

## Claims

1. A washing apparatus comprising:
an apparatus body;
an expandable and contractible wash tub having one side supported at an upper part of the apparatus body, the wash tub being provided with an introduction port through which laundry is introduced;
an auxiliary tank disposed at a lower part of the apparatus body to store wash water discharged from the wash tub;
a front cover to support the other side of the wash tub, the front cover having a door hingedly mounted to open and close the introduction port; and
a circulation pump disposed between the wash tub and the auxiliary tank so that the wash tub and the auxiliary tank communicate with each other via the circulation pump to circulate wash water between the wash tub and the auxiliary tank so that the wash tub is contracted and expanded.

2. The washing apparatus according to claim 1, further comprising a bubble supply device, the bubble supply device comprising:
a bubble pump to supply wash water from the auxiliary tank to the wash tub so that laundry in the wash tub is washed using bubbles;
an ejector to increase flow speed of the wash water supplied to the wash tub by the bubble pump; and
an air introduction pipe provided adjacent to the ejector to allow external air to be introduced therethrough.

3. The washing apparatus according to claim 2, wherein the front cover is moved based on expansion and contraction of the wash tub.

4. The washing apparatus according to claim 3, wherein the wash tub is disposed at the upper part of the apparatus body, the auxiliary tank is disposed at the lower part of the apparatus body, and the bubble supply device is disposed between the wash tub and the auxiliary tank.

5. The washing apparatus according to claim 4, further comprising a wash water supply pipe connected between one side of the bubble pump and the auxiliary tank and a bubble supply pipe connected between the other side of the bubble pump and the wash tub.

6. The washing apparatus according to claim 4, wherein the circulation pump comprises a motor rotatable in forward and reverse directions.

7. The washing apparatus according to claim 6, wherein the motor comprises a brushless direct current motor.

8. The washing apparatus according to claim 6, further comprising a first connection pipe connected between the circulation pump and the wash tub and a second connection pipe connected between the auxiliary tank and the wash tub,
wherein the second connection pipe is provided with a valve to control flow of the wash water.

9. The washing apparatus according to claim 6, wherein the auxiliary tank has a drainage pipe communicating with an outside to drain wash water from the auxiliary tank, and the drainage pipe is provided with a drainage valve to control drainage of the wash water.

10. The washing apparatus according to claim 6, wherein the wash tub is contracted and expanded by wash water moving between the wash tub and the auxiliary tank according to the forward and reverse rotation of the circulation pump.

11. A washing method of a washing apparatus comprising:
hermetically sealing an expandable and contractible wash tub after placing laundry, wash water and detergent in the wash tub; and
washing the laundry using contraction and expansion of the wash tub.

12. The washing method according to claim 11, further comprising washing the laundry in the wash tub using bubbles.

13. The washing method according to claim 12, wherein the washing apparatus further comprises an auxiliary tank to store wash water, and
washing the laundry in the wash tub using bubbles comprises using bubbles generated by mixing external air with wash water containing detergent during supply of the wash water from the auxiliary tank to the wash tub.

14. The washing method according to claim 13, wherein washing the laundry using contraction and expansion of the wash tub comprises washing the laundry using contraction and expansion of the wash tub during movement of wash water between the wash tub and the auxiliary tank using a motor rotatable in forward and reverse directions.

15. The washing method according to claim 14, further comprising spin-drying the laundry,
wherein spin-drying the laundry includes draining the wash water from the auxiliary tank so that the wash tub is contracted by operation of the circulation pump, whereby the laundry in the wash tub is spin-dried while being compressed.
